# EUROPÄISCHE PATENTSCHRIFT

(11) **EP 2 499 026 B1**
(45) Veröffentlichungstag und Bekanntmachung des Hinweises auf die Patenterteilung: **04.09.2013**
(21) Anmeldenummer: 10779708.6
(22) Anmeldetag: 11.11.2010
(51) Int. Cl.: B60R 7/10

(54) **VORRICHTUNG ZUM AUFHÄNGEN VON KLEIDUNGSSTÜCKEN**
DEVICE FOR HANGING ITEMS OF CLOTHING
DISPOSITIF POUR LA SUSPENSION DE VÊTEMENTS

(30) Priorität: 13.11.2009 DE 102009052824; 29.04.2010 DE 102010018788
(43) Veröffentlichungstag der Anmeldung: 19.09.2012
(73) Patentinhaber: Kinetix AG, 8750 Glarus (CH)
(72) Erfinder: SKOTT, Jürgen, 72213 Altensteig (DE); ACKERET, Peter, CH - 8048 Zürich (CH)
(74) Vertreter: Dreiss
(86) Internationale Anmeldenummer: PCT/EP2010/006857
(87) Internationale Veröffentlichungsnummer: WO 2011/057779

(56) Entgegenhaltungen:
- WO-A2-2008/131944
- DE-U1- 20 309 356
- US-A- 3 131 817
- US-A- 3 927 741
- US-A- 6 076 716

## Beschreibung

Die Erfindung betrifft eine Vorrichtung zum Aufhängen von Kleidungsstücken an einem Fahrzeugsitzteil, wie eine Rückenlehne, Kopfstütze oder Kopfstützenhalterung eines Fahrzeugsitzes.

Vorrichtungen zum Aufhängen von Kleidungsstücken in Fahrzeugen, meist in Form von Kleiderbügeln, die mit verschiedenartigen Befestigungsmittel an den Kopfstützenstangen auf der Rückseite von Fahrzeugsitzen angebracht werden, sind in unterschiedlichen Ausführungsformen bekannt. WO2008/131944A2 offenbart eine solche vorrichtung, gemäß dem Oberbegriff des Anspruchs 1.

Meist ist der Kleiderbügel mit einem oder mehreren Stützelementen versehen die mit einer Klemmvorrichtung an den Kopfstützenstangen befestigt werden können. Kleiderbügel, Stützelemente und Befestigungsvorrichtung bilden dabei meist eine feste Baugruppe, z.B. aus einem entsprechend geformten Federstahldraht mit Adapterstücken aus Kunststoff an den Drahtenden, die federnd zwischen die Kopfstützenstangen geklemmt werden.

Oft besteht das Bedürfnis, Kleidungsstücke nicht nur während der Fahrt schonend an einem Kleiderbügel aufzuhängen, sondern - z.B. bei Hotelbesuchen - die Kleidungsstücke auf dem Kleiderbügel aus dem Fahrzeug mitzunehmen und an einem anderen Ort an einer Garderobenstange aufzuhängen.

Dazu ist es erforderlich, dass der Kleiderbügel mit einem Befestigungshaken versehen ist, der jedoch im Fahrzeug ein Sicherheitsrisiko für Passagiere auf dem Rücksitz bedeutet und auch bezüglich Ästhetik nicht befriedigt.

Aufgabe der vorliegenden Erfindung ist es, eine Vorrichtung zum Aufhängen von Kleidungsstücken mit einem Kleiderbügel zu schaffen, die auf der Rückseite von Fahrzeugsitzen angebracht werden kann und die es ermöglicht, Kleidungsstücke auf dem Kleiderbügel aus dem Fahrzeug herauszunehmen und an einer Garderobenstange aufzuhängen.

Diese Aufgabe wird erfindungsgemäss durch eine Vorrichtung zum Aufhängen von Kleidungsstücken an einem Fahrzeugsitzteil, wie eine Rückenlehne, Kopfstütze oder Kopfstützenhalterung eines Fahrzeugsitzes mit den Merkmalen des Anspruchs 1 gelöst.

Die Vorrichtung umfasst eine Befestigungseinrichtung zum Verbinden der Vorrichtung mit dem Fahrzeugsitzteil und ein Trägerelement, das mit der Befestigungseinrichtung verbunden ist sowie einen Kleiderbügel, der mit dem Trägerelement über eine lösbare Kupplung verbunden ist, wobei am Kleiderbügel ein Befestigungshaken zum Aufhängen des Kleiderbügels vorgesehen ist, der zwischen einer Nichtgebrauchsstellung, in der der Befestigungshaken ganz oder teilweise im Kleiderbügel aufgenommen ist oder an diesem anliegt und einer Gebrauchsstellung, in der der Befestigungshaken soweit aus dem Kleiderbügel herausragt, dass der Kleiderbügel an einer Garderobenstange aufgehängt werden kann, bewegbar ist.

Das Einfügen einer lösbaren Kupplung zwischen dem Trägerelement und dem Kleiderbügel ermöglicht es, den Kleiderbügel auf einfache und schnelle Weise von der Vorrichtung zu trennen und separat zu verwenden. Der Befestigungshaken ist für den Gebrauch im Fahrzeug ganz oder teilweise im Kleiderbügel aufgenommen oder liegt an diesem an und stört so weder bezüglich Sicherheit noch bezüglich Ästhetik. Wird der Kleiderbügel ausserhalb des Fahrzeugs benötigt, z.B. bei einem Hotelaufenthalt, kann er mit oder ohne Jackett vom Trägerelement gelöst und am auszieh- oder ausklappbaren Befestigungshaken transportiert und an einer Garderobenstange aufgehängt werden.

Die Kupplung zwischen dem Trägerelement und dem Kleiderbügel ist vorzugsweise als Steckverbindung ausgebildet mit einem ersten Kupplungselement am Trägerelement und einem zweiten Kupplungselement am Kleiderbügel so dass der Kleiderbügel einhändig, allein durch Zug am Kleiderbügel oder am Befestigungshaken, vom Trägerelement gelöst werden kann.

In einer bevorzugten Ausführungsform ist eine Verriegelung vorgesehen, die mit einem Betätigungsorgan gelöst werden kann, wobei das Betätigungsorgan vorzugsweise an einer Stelle des Kleiderbügels platziert sein sollte, die auch wenn ein Kleidungsstück aufgehängt ist, zugänglich bleibt, z.B. neben dem Befestigungshaken oder auf der gegen das Fahrzeugsitzteil gerichteten Seite des Kleiderbügels. Möglich wäre schliesslich auch, dass die Verriegelung durch das Herausziehen oder Ausklappen des Befestigungshakens gelöst wird.

Der Kleiderbügel ist vorzugsweise als Hohlkörper ausgebildet, mit einem mittig angeordneten Bügelkörper sowie seitlich an diesem angeordneten Bügelarmen, die auf ihren Unterseiten mit Abdeckungen verschlossen sind. Auf der Unterseite des Bügelkörpers ist vorzugsweise das zweite Kupplungselement angeordnet, das den Bügelkörper verschliesst.

In einer bevorzugten Ausführungsform ist im Bügelkörper ein oben offener Aufnahmeraum vorgesehen, in dem der Befestigungshaken in der Nichtgebrauchsstellung aufgenommen ist. Im Aufnahmeraum kann eine vorzugsweise vertikal angeordnete Führungsschiene vorgesehen sein, in der ein am unteren Ende des Befestigungshakens angeordneter Führungsschlitten geführt ist, so dass der Befestigungshaken vertikal durch die Öffnung nach oben aus dem Bügelkörper gezogen werden kann, bis der Führungsschlitten am Ende der Führungsschiene anschlägt. Seitlich der Öffnung kann zum Ergreifen des Befestigungshakens eine Griffmulde am Bügelkörper vorgesehen werden.

Am Befestigungshaken können horizontal ausgerichtete Abdeckungen angebracht sein, welche die Öffnung des Aufnahmeraums in der Gebrauchs-und/oder Nichtgebrauchsstellung des Befestigungshakens verschliessen.

An Stelle eines Aufnahmeraums im Bügelkörper könnte auf einer seiner Breitseiten eine muldenförmige Vertiefung angeordnet sein, in der der Befestigungshaken in der Nichtgebrauchsstellung aufgenommen ist.

Statt mit einer Linearführung könnte der Befestigungshaken auch über ein Gelenk mit dem Bügelkörper verbunden sein, mit einer Drehachse die parallel oder quer zur Breitseite des Bügelkörpers verläuft.

Der Befestigungshaken kann mit einer Feder in die Nichtgebrauchsstellung vorgespannt sein, so dass er sich bei Nichtgebrauch automatisch in die Nichtgebrauchsstellung zurückbewegt.

In einer bevorzugten Ausführungsform ist das Trägerelement als längliche Stütze ausgebildet, deren Längsachse im Wesentlichen vertikal verläuft und die an ihrem unteren Ende fest oder beweglich, vorzugsweise über ein Gelenk, mit der Befestigungseinrichtung verbunden ist.

Vorzugsweise ist das Trägerelement über eine lösbare Kupplung mit der Befestigungseinrichtung verbunden. Die Kupplung kann eine Aufnahmebuchse und ein Steckelement sowie eine manuell lösbare Verriegelungsvorrichtung umfassen.

Der Kleiderbügel ist vorzugsweise am oberen Ende des stützenartigen Trägerelements angeordnet und die Kupplung zwischen Trägerelement und Kleiderbügel bevorzugt an der oberen Stirnseite des Trägerelements vorgesehen, so dass kein Versatz zwischen Trägerelement und Kleiderbügel entsteht. Die Kupplungselemente am Trägerelement sind vorzugsweise nicht überstehend, so dass auch bei abgenommenem Kleiderbügel keine Gefährdung der Passagiere besteht.

Auf der der Kopfstütze des Fahrzeugsitzes abgewandten Breitseite des Trägerelements oder des Bügelkörpers kann ein vorzugsweise ausklappbarer Kleiderhaken angeordnet sein, der in der Nichtgebrauchsstellung in einer Mulde untergebracht ist und mit einer Feder in die Nichtgebrauchsstellung vorgespannt wird. Die Längsachse des Kleiderhakens verläuft dabei vorzugsweise parallel zur Längsachse des Trägerelements.

In einer bevorzugten Ausführungsform ist der Kleiderhaken am Bügelkörper angeordnet und an seinem oberen Ende mit einer gegen den Bügelkörper gerichteten Abkröpfung versehen, die mit der Kontur des Bügelkörpers fluchtet, wenn der Kleiderhaken eingeklappt ist. Die Mulde ist vorzusweise soweit über das abgeköpfte Ende des Kleiderhakens hinaus verlängert, dass dieses zum Ausklappen des Kleiderhakens bequem erfasst werden kann.

Weitere bevorzugte Ausgestaltungen der Erfindung ergeben sich aus den übrigen, in den Unteransprüchen genannten Merkmalen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend in Ausführungsbeispielen anhand der zugehörigen Zeichnungen näher erläutert. Es zeigen:
Fig. 1 zeigt eine Perspektivansicht einer ersten Variante der erfindungsgemässen Vorrichtung mit Kleiderbügel und dem Befestigungshaken in der Nichtgebrauchsstellung sowie ausgeklapptem Kleiderhaken und Teilen der Befestigungseinrichtung.
Fig. 2 zeigt eine Perspektivansicht des vom Trägerelement abgenommenen Kleiderbügels gemäss Fig. 1 mit dem Befestigungshaken in der Gebrauchsstellung
Fig. 3 zeigt eine Perspektivansicht des Trägerelements gemäss Fig. 1 ohne Kleiderbügel und mit eingeklapptem Kleiderhaken.
Fig. 4 zeigt eine Seitenansicht der Vorrichtung gemäss Fig. 1, mit Befestigungseinrichtung, montiert an der Kopfstützenhalterung eines Fahrzeugsitzes, mit eingeklapptem Kleiderhaken.
Fig. 5 zeigt einen Ausschnitt der Vorrichtung gemäss Fig. 1 in einem Längsschnitt.
Fig. 6 zeigt einen Ausschnitt der Vorrichtung gemäss Fig. 2 und 3 in einem Längsschnitt.
Fig. 7 zeigt einen Längsschnitt eine Variante des Befestigungshakens in der Gebrauchsstellung.
Fig. 8 zeigt einen Längsschnitt des Befestigungshakens gemäss Fig. 7 in der Nichtgebrauchsstellung.
Fig. 9 zeigt eine perspektivische Explosionsdarstellung einer zweiten Variante der erfindungsgemässen Vorrichtung.
Fig. 10 zeigt eine weitere Variante des Befestigungshakens in der Gebrauchsstellung.

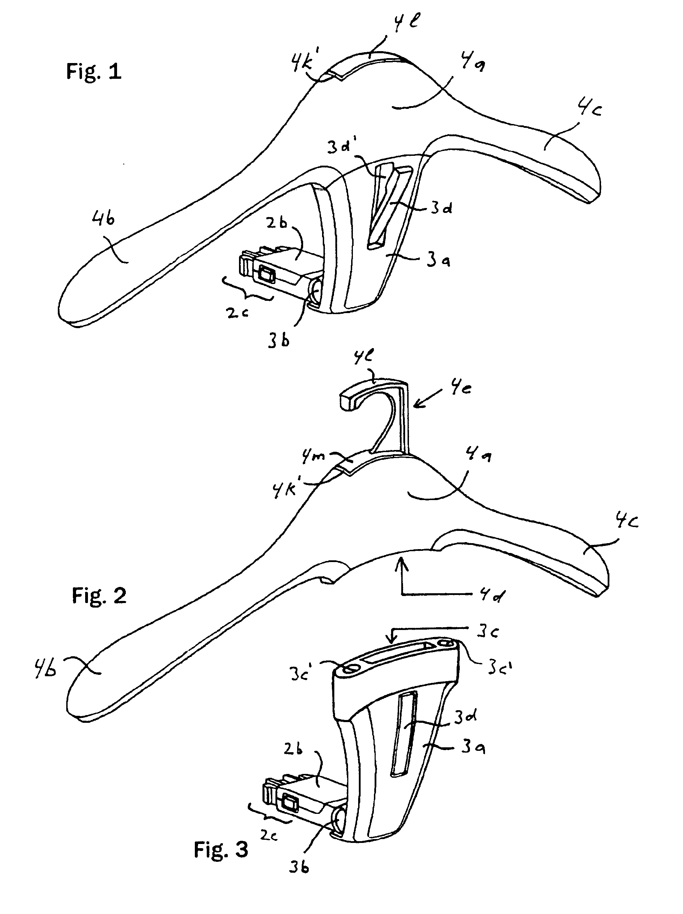

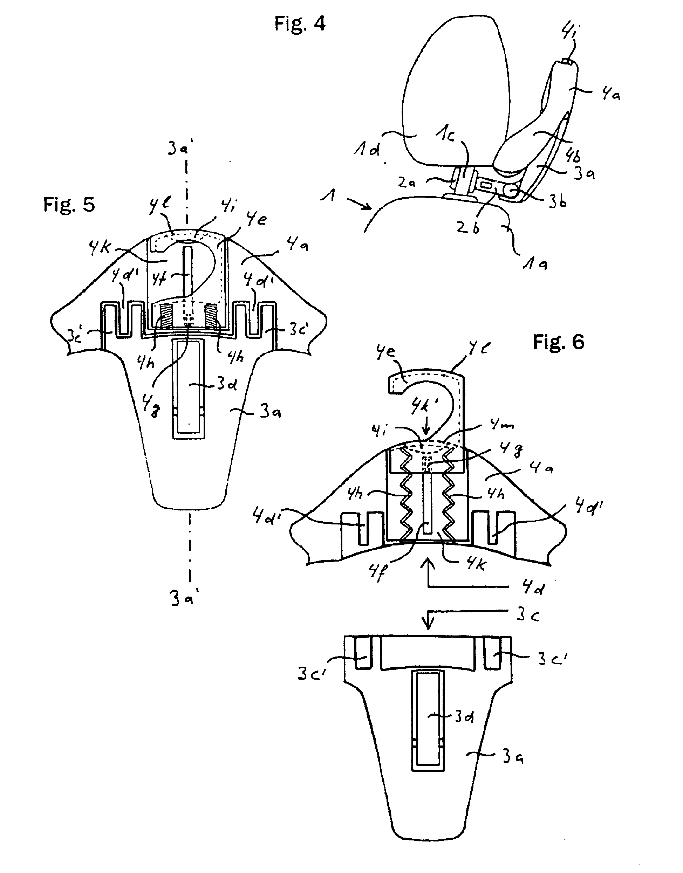

Fig. 1 bis 6 zeigen eine erste Variante der erfindungsgemässen Vorrichtung. Das Trägerelement 3a ist an seinem unteren Ende über das Gelenk 3b mit dem Steckelement 2b beweglich verbunden. An der Kopfstützenhalterung 1c, welche die Rückenlehne 1a mit der Kopfstütze 1d eines Fahrzeugsitzes 1 verbindet, ist die Aufnahmebuchse 2a befestigt, in die das Steckelement 2b eingesteckt und mit der Verriegelungsvorrichtung 2c lösbar verriegelt werden kann (Fig. 4). Aufnahmebuchse 2a, Steckelement 2b und Verriegelungsvorrichtung 2c bilden gemeinsam eine lösbare Kupplung, mit der das Trägerelement 3a, 3b mit dem Kleiderbügel 4a, 4b, 4c am Fahrzeugsitz 1 befestigt oder von diesem abgenommen werden kann.

Auf der vom Fahrzeugsitz wegweisenden Breitseite des Trägerelements 3a, 3b ist der ausklappbare Kleiderhaken 3d angeordnet, der in seiner Nichtgebrauchsstellung in der im Trägerelement 3a, 3b angeordneten Mulde 3d' aufgenommen wird.

Auf der Stirnseite am oberen Ende des Trägerelements 3a, 3b sind zwei Hülsen 3c' ausgebildet, die das erste Kupplungselement 3c bilden, in die zwei auf der Unterseite des Kleiderbügels 4a, 4b, 4c ausgebildete Stifte 4d' eingreifen, die das zweite Kupplungselement 4d bilden.

Der Kleiderbügel umfasst einen mittig angeordneten Bügelkörper 4a sowie seitlich an diesem angeordnete Bügelarme 4b, 4c.

Im Bügelkörper 4a ist mittig der Aufnahmeraum 4k untergebracht, der auf der Oberseite mit einer Öffnung 4k' versehen ist, die mit der Aussenkontur des Bügelkörpers 4a fluchtet.

Im Aufnahmeraum 4k ist der Befestigungshaken 4a in seiner Nichtgebrauchsstellung untergebracht und mit einer vertikal angeordneten Linearführung, 4f, 4g geführt. Die Linearführung umfasst eine im Aufnahmeraum angeordnete Führungsschiene 4f sowie einen am unteren Ende des Befestigungshakens 4e angebrachten Führungsschlitten 4g, der in der Führungsschiene gleitet und auch den Anschlag zur Begrenzung des Auszugswegs des Befestigungshakens 4e bildet.

Der Befestigungshaken 4e wird mit den Federn 4h in die Nichtgebrauchsstellung vorgespannt.

Am Befestigungshaken 4e ist eine untere Abdeckung 4m und eine obere Abdeckung 4l angebracht, welche die Öffnung 4k' des Aufnahmeraums 4k in der Gebrauchsstellung (Fig. 1), respektive Nichtgebrauchsstellung (Fig. 2) des Befestigungshakens verschliessen.

Auf der Breitseite der Öffnung 4k' ist eine Griffmulde 4i ausgebildet, in der der Befestigungshaken 4e am Rand der oberen Abdeckung 4l erfasst und aus dem Aufnahmeraum 4k herausgezogen werden kann. Bei Wegfall des Zugs wird der Befestigungshaken 4e mit den Federn 4h in den Aufnahmeraum 4k eingezogen.

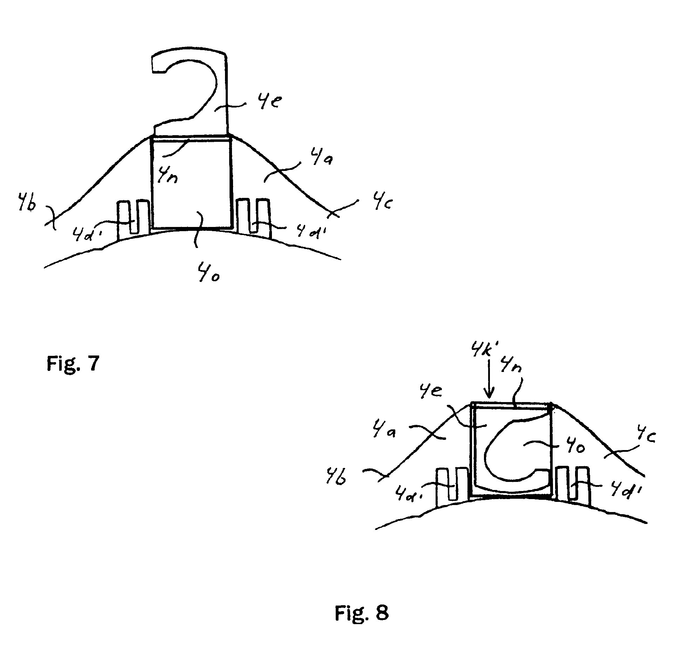

Fig. 7 und 8 zeigen eine Variante des Befestigungshakens 4e, der über eine in etwa horizontal und parallel zur Breitseite des Bügelkörpers verlaufende Drehachse 4n mit dem Bügelkörper verbunden ist. Auf der Breitseite des Bügelkörpers 4a ist eine muldenförmige Vertiefung 4o ausgebildet, in der der Befestigungshaken 4e in seiner Nichtgebrauchsstellung aufgenommen ist.

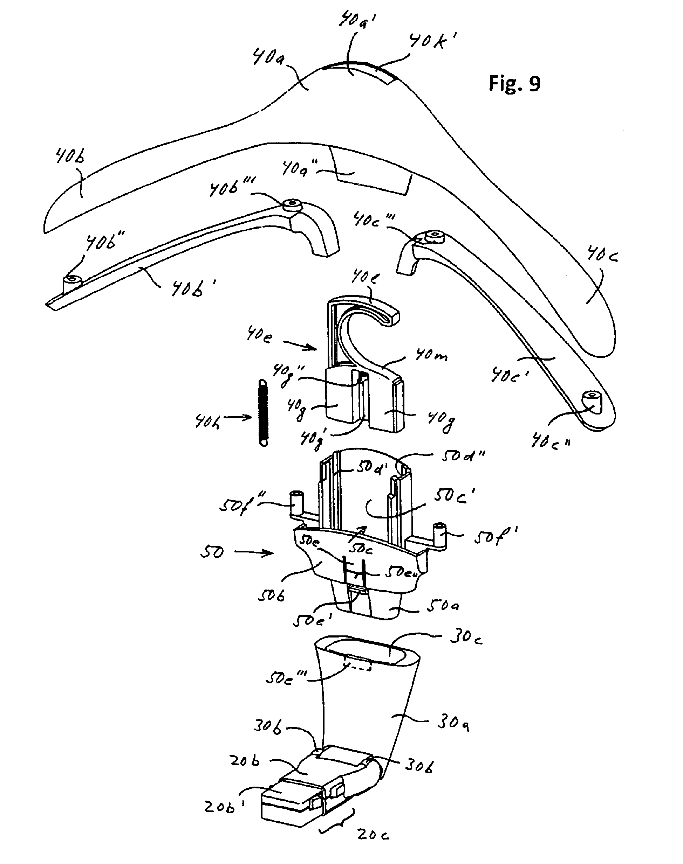

Fig. 9 zeigt eine zweite Variante der erfindungsgemässen Vorrichtung in einer Explosionsdarstellung. Der Kleiderbügel 40a, 40b, 40c ist als Hohlkörber ausgebildet und auf seiner Unterseite offen. Die offenen Unterseiten der Bügelarme 40b, 40c werden mit den Abdeckungen 40b', 40c' verschlossen. Der Bügelkörper 40a wird vom Zwischenstück 50 abgedeckt, das von unten in den Bügelkörber 40a eingeführt und zusammen mit den beiden Abdeckungen 40b', 40c' an den Domen 40b", 40b'", 40c", 40c"', 50f', 50f" mit dem Kleiderbügel 40a, 40b, 40c verschraubt wird.

Auf der Unterseite des Zwischenstücks 50 ist das zweite Kupplungselement 50a in Form eines gerundeten Pyramidenstumpfs angeordnet, der in einer am oberen Ende des Trägerelements 3a, 30a angeordneten, komplementären, Lagerschale, die das erste Kupplungselement 30c bildet, passgenau aufgenommen wird.

Auf der gegen das Fahrzeugsitzteil 1a, 1c, 1d gerichteten Seite des Zwischenstücks 50 ist eine Verriegelungseinrichtung 50e, 50e', 50e", 50e"' angeordnet, mit der das erste und zweite Kupplungselement 30c, 50a zusammengehalten werden.

An der hinteren Abdeckung 50b des Zwischenstücks 50 ist eine Federzunge 50e ausgebildet, an deren unterem Ende ein Verriegelungshaken 50e' angeordnet ist, der nach erfolgtem Zusammenstecken der Kupplungselemente 30c, 50a in die auf der Innenseite des ersten Kupplungselements 30c angeordnete Falle 50e'" einrastet. Durch Druck auf das Betätigungsorgan 50e" wird der Verriegelungseinrichtung 50e, 50e', 50e", 50e'" gelöst, so dass der Kleiderbügel 40a, 40b, 40c, 40b', 40c', 50 vom Trägerelement 30a getrennt werden kann.

Am Zwischenstück 50 ist ein Aufnahmeraum 50c für den Befestigungshaken 40e vorgesehen. An den über die Rückwand 50c' verbundenen Seitenwänden des Aufnahmeraume 50c sind Führungsschienen 50d', 50d" angeordnet, in denen der Führungsschlitten 40g des Befestigungshakens 40e geführt ist. In der Mitte des Führungsschlittens 40g ist eine Ausnehmung 40g' mit einer Federaufhängung 40g" zur Aufnahme der Feder 40h vorgesehen, die den Befestigungshaken 40e bei Nichtgebrauch in den Aufnahmeraum 50c einzieht.

An der oberen Stirnfläche 40a' des Bügelkörpers 40a ist die Öffnung 40k' angeordnet, durch die der Befestigungshaken 40e aus dem Aufnahmeraum 50c in die Gebrauchsstellung bewegt werden kann. Obere und untere Abdeckungen 401, 40m am Befestigungshaken 40e verschliessen die Öffnung 40k' in der Nichtgebrauchs-, bzw. in der Gebrauchsstellung des Befestigungshakens 40e.

Auf der dem Fahrzeugsitzteil 1a, 1 c, 1 d abgewandten Seite ist am Bügelkörpers 40a eine Blende 40a" angebracht, die Teile des Zwischenstücks 50 abdeckt.

Das Trägerelement 30a ist am unteren Ende über das Gelenk 30b mit dem Steckelement 20b, 20b' verbunden. Der Führungsabschnitt 20b' des Steckelements 20b, wird in eine am Fahrzeugsitzteil 1a, 1c, 1d angeordnete Aufnahmebuchse 2a eingesteckt und mit der Verriegelungsvorrichtung 20c lösbar verriegelt.

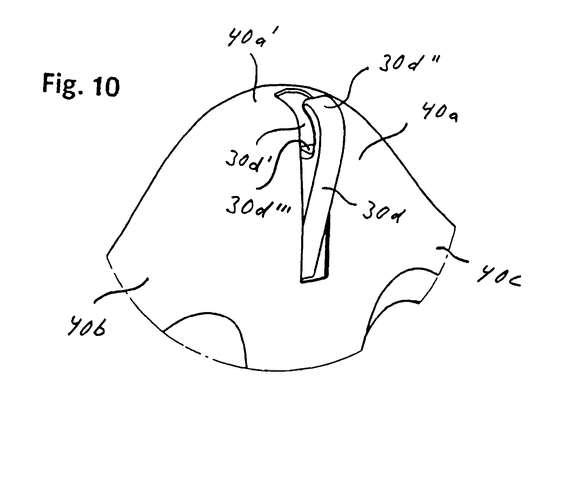

Fig. 10 zeigt einen auf der dem Fahrzeugsitzteil 1 a, 1 c, 1 d abgewandten Seite am Bügelkörper 40a angeordneten Kleiderhaken 30d, dessen Längsachse parallel zur Längsachse 30a' (Fig. 5) des Trägerelements 30a verläuft und der an seinem unteren Ende am Bügelkörper 40a drehbar gelagert ist.

Am oberen Ende ist der Kleiderhaken 30d mit einer gegen den Bügelkörper 40a gerichtete Abkröpfung 30d" versehen, deren Aussenseite mit der oberen Stirnfläche 40a' des Bügelkörpers 40a fluchtet, wenn der Kleiderhaken 30d in die Mulde 30d' eingeklappt ist. Die Mulde 30d' ist soweit über die Abkröpfung 30d" hinaus verlängert, dass das freie Ende des Kleiderhakens 30d zum Ausklappen erfasst werden kann.

Hinter der Abkröpfung 30d" ist auf der Innenseite des Kleiderhakens 30d eine Auflage 30d"' angeordnet, die verhindert, dass sich Aufhängeösen von Kleidungsstücken im Lagerbereich des Kleiderhakens 30d verklemmen können.

Der Kleiderhaken 30d wird mit einer im Achsbereich angeordneten Schenkelfeder (nicht dargestellt) in die eingeklappte Position vorgespannt.

## Patentansprüche

1. Vorrichtung zum Aufhängen von Kleidungsstücken an einem Fahrzeugsitzteil, wie eine Rückenlehne (1a), Kopfstütze (1d) oder Kopfstützenhalterung (1 c) eines Fahrzeugsitzes (1) mit einer Befestigungseinrichtung (2a, 2b, 2c, 20b, 20b', 20c) zum Verbinden der Vorrichtung mit dem Fahrzeugsitzteil (1 a, 1 c, 1 d) und einem Trägerelement (3a, 30a), das mit der Befestigungseinrichtung (2a, 2b, 2c, 20b, 20b', 20c) verbunden ist sowie mit einem Kleiderbügel (4a, 4b, 4c, 40a, 40b, 40c, 40b', 40c'), der mit dem Trägerelement (3a, 30a)
verbunden ist dadurch gekennzeichneit, daß der Kleiderbügel mit dem Trägerelement über eine Lösbare Kupplung (3c,3c',4d,4d',30c,50a) verbunden ist, am Kleiderbügel (4a, 4b, 4c, 40a, 40b, 40c, 40b', 40c') ein Befestigungshaken (4e, 40e) zum Aufhängen des Kleiderbügels (4a, 4b, 4c, 40a, 40b, 40c, 40b', 40c') vorgesehen ist, der zwischen einer Nichtgebrauchsstellung, in der der Befestigungshaken (4e, 40e) ganz oder teilweise im Kleiderbügel (4a, 4b. 4c, 40a, 40b, 40c, 40b', 40c') aufgenommen ist oder an diesem anliegt und einer Gebrauchsstellung, in der der Befestigungshaken (4e, 40e) soweit aus dem Kleiderbügel (4a, 4b, 4c, 40a, 40b, 40c, 40b', 40c') herausragt, dass der Kleiderbügel (4a, 4b, 4c, 40a, 40b, 40c, 40b', 40c') an einer Garderobenstange aufgehängt werden kann, bewegbar ist.

2. Vorrichtung nach Anspruch 1, wobei das Trägerelement (3a, 30a) an seinem unteren Ende über ein Gelenk (3b, 30b) mit der Befestigungseinrichtung (2a, 2b, 2c, 20b, 20b', 20c) verbunden ist.

3. Vorrichtung nach einem der Ansprüche 1 oder 2, wobei die Befestigungseinrichtung (2a, 2b, 2c, 20b, 20b', 20c) eine lösbare Kupplungsvorrichtung mit einer Aufnahmebuchse (2a) und einem Steckelement (2b, 20b, 20b') sowie einer Verriegelungsvorrichtung (2c, 20c) umfasst, mit der das Steckelement (2b, 20b, 20b') in der Aufnahmebuchse (2a) verriegelt wird.

4. Vorrichtung nach einem der Ansprüche 1 bis 3, wobei der Kleiderbügel (4a, 4b, 4c, 40a, 40b, 40c, 40b', 40c') einen mittig angeordneten Bügelkörper (4a, 40a) sowie seitlich an diesem angeordnete Bügelarme (4b, 4c, 40b, 40c) umfasst und wobei der Bügelkörper (4a, 40a) und die Bügelarme (4b, 4c, 40a, 40b) auf ihren Unterseiten mindestens teilweise mit Abdeckungen (40b', 40c', 50) verschlossen sind.

5. Vorrichtung nach Anspruch 4, wobei die Kupplung (3c, 3c', 4d, 4d', 30c, 50a) ein am Trägerelement (3a, 30a) angeordnetes erstes Kupplungselement (3c, 3c', 30c) und ein am Bügelkörper (4a, 40a) angeordnetes zweiten Kupplungselement (4d, 4d', 50a) umfasst.

6. Vorrichtung nach Anspruch 5, wobei das erste Kupplungselement (3c, 3c', 30c) an der oberen, gegen den Bügelkörper (4a, 40a) gerichteten, Stirnseite des Trägerelements (3a, 30a) und das zweite Kupplungselement (4d, 4d', 50a) an der gegen das Trägerelement (3a 30a) gerichteten Unterseite des Bügelkörpers (4a, 40a) angeordnet und als Steckverbindung ausgebildet sind.

7. Vorrichtung nach einem der Ansprüche 5 bis 6, wobei eine Verriegelungseinrichtung (50e, 50e', 50e", 50e"') vorgesehen ist mit der das erste Kupplungselement (3c, 3c', 30c) und das zweite Kupplungselement (4d, 4d', 50a) verriegelbar sind.

8. Vorrichtung nach einem Anspruch 7, wobei das Betätigungsorgan (50e") zum Lösen der Verriegelungseinrichtung (50e, 50e', 50e", 50e"') auf der gegen das Fahrzeugsitzteil (1 a, 1c, 1d) gerichteten Seite am Trägerelement (3a, 30a) oder am Bügelkörper (4a, 40a) angeordnet ist.

9. Vorrichtung nach einem der Ansprüche 4 bis 8, wobei im oder am Bügelkörper (4a, 40a) ein Aufnahmeraum (4k, 50c) oder eine muldenförmige Vertiefung (4o) vorgesehen ist, in der der Befestigungshaken (4e, 40e) in der Nichtgebrauchsstellung aufgenommen ist.

10. Vorrichtung nach einem der Ansprüche 4 bis 9, wobei der Befestigungshaken (4e, 40e) mit einer vertikal ausgerichteten Linearführung (4f, 4g, 50d', 50d") im oder am Bügelkörper (4a, 40a) geführt ist.

11. Vorrichtung nach Anspruch 10, wobei der Aufnahmeraum (4k, 50c) eine auf der oberen Stirnfläche (40a') des Bügelkörpers (4a, 40a) angeordnete Öffnung (4k', 40k') aufweist, durch die der Befestigungshaken (4e, 40e) zwischen der Nichtgebrauchsstellung und der Gebrauchsstellung bewegt werden kann.

12. Vorrichtung nach einem der Ansprüche 4 bis 9, wobei der Befestigungshaken (4e, 40e) über eine Drehachse (4n) mit dem Bügelkörper (4a, 40a) verbunden ist.

13. Vorrichtung nach Anspruch 12, wobei die Drehachse (4n) in etwa horizontal und parallel oder quer zur Breitseite des Bügelkörpers (4a, 40a) verläuft.

14. Vorrichtung nach einem der Ansprüche 1 bis 13, wobei der Befestigungshaken (4e, 40e) mittels einer Feder (4h, 40h) in die Nichtgebrauchsstellung vorgespannt ist.

15. Vorrichtung nach einem der Ansprüche 1 bis 14, wobei auf der dem Fahrzeugsitzteil (1a, 1c, 1d) abgewandten Breitseite des Trägerelements (3a, 30a) oder Bügelkörpers (4a, 40a) ein ausklappbarer Kleiderhaken (3d, 30d) angeordnet ist, der in der Nichtgebrauchsstellung in einer am Trägerelement (3a, 30a) oder am Bügelkörper (4a, 40a) ausgebildeten Mulde (3d\ 30d') aufgenommen ist.

## Claims

1. Device for hanging items of clothing on a vehicle seat part such as a back rest (1a), head rest (1d) or head rest holder (1c) of a vehicle seat (1), with a fixing device (2a, 2b, 2c, 20b, 20b', 20c) for attaching the device to the vehicle seat part (1a, 1c, 1d) and a carrier element (3a, 30a) which is connected to the fixing device (2a, 2b, 2c, 20b, 20b', 20c) and with a coathanger (4a, 4b, 4c, 40a, 40b, 40c, 40b', 40c') which is connected to the carrier element (3a, 30a), **characterised in that** the coathanger is connected to the carrier element via a releasable coupling (3c, 3c', 4d, 4d', 30c, 50a), a fixing hook (4e, 40e) is provided on the coathanger (4a, 4b, 4c, 40a, 40b, 40c, 40b', 40c') for hanging the coathanger (4a, 4b, 4c, 40a, 40b, 40c, 40b', 40c'), which hook can be moved between an out-of-use position in which the fixing hook (4e, 40e) is held fully or partly in the coathanger (4a, 4b, 4c, 40a, 40b, 40c, 40b', 40c') or lies against this, and a usage position in which the fixing hook (4e, 40e) protrudes so far out of the coathanger (4a, 4b, 4c, 40a, 40b, 40c, 40b', 40c') that the coathanger (4a, 4b, 4c, 40a, 40b, 40c, 40b', 40c') can be hung on a wardrobe rail.

2. Device according to claim 1, wherein the carrier element (3a, 30a) is connected at its lower end via a joint (3b, 30b) to the fixing device (2a, 2b, 2c, 20b, 20b', 20c).

3. Device according to one of claims 1 or 2, wherein the fixing device (2a, 2b, 2c, 20b, 20b', 20c) comprises a releasable coupling device with a receiver socket (2a) and a push-in element (2b, 20b, 20b') and a locking device (2c, 20c) with which the push-in element (2b, 20b, 20b') is locked in the receiver socket (2a).

4. Device according to any of claims 1 to 3, wherein the coathanger (4a, 4b, 4c, 40a, 40b, 40c, 40b', 40c') comprises a centrally arranged hanger body (4a, 40a) and hanger arms (4b, 4c, 40b, 40c) arranged on the sides thereof, and wherein the hanger body (4a, 40a) and the hanger arms (4b, 4c, 40a, 40b) on their undersides are closed at least partly by covers (40b', 40c', 50).

5. Device according to claim 4, wherein the coupling (3c, 3c', 4d, 4d', 30c, 50a) comprises a first coupling element (3c, 3c', 30c) arranged on the carrier element (3a, 30a) and a second coupling element (4d, 4d', 50a) arranged on the hanger body (4a, 40a).

6. Device according to claim 5, wherein the first coupling element (3c, 3c', 30c) is arranged on the upper face of the carrier element (3 a, 30a) directed towards the hanger body (4a, 40a), and the second coupling element (4d, 4d', 50a) is arranged on the underside of the hanger body (4a, 40a) directed towards the carrier element (3a, 30a), and said elements are formed as push-in connections.

7. Device according to any of claims 5 to 6, wherein a locking device (50e, 50e', 50e", 50e'") is provided with which the first coupling element (3c, 3c', 30c) and the second coupling element (4d, 4d', 50a) can be locked.

8. Device according to claim 7, wherein the actuating element (50e") for releasing the locking device (50e, 50e', 50e", 50e"') is arranged on the side of the carrier element (3a, 30a) or of the hanger body (4a, 40a) directed towards the vehicle seat part (1a, 1b, 1c).

9. Device according to any of claims 4 to 8, wherein in or on the hanger body (4a, 40a) is provided a receiver chamber (4k, 50c) or a dish-shaped depression (4o) in which the fixing hook (4e, 40e) is held in the out-of-use position.

10. Device according to any of claims 4 to 9, wherein the fixing hook (4e, 40e) is guided with a vertically oriented linear guide (4f, 4g, 50d', 50d") in or on the hanger body (4a, 40a).

11. Device according to claim 10, wherein the receiver chamber (4k, 50c) has an opening (4k', 40k') arranged on the upper face (40a') of the hanger body (4a, 40a), through which opening the fixing hook (4e, 40e) can be moved between the out-of-use position and the usage position.

12. Device according to any of claims 4 to 9, wherein the fixing hook (4e, 40e) is connected with the hanger body (4a, 40a) via a rotary axis (4n).

13. Device according to claim 12, wherein the rotary axis (4n) runs approximately horizontal and parallel or transverse to the wide side of the hanger body (4a, 40a).

14. Device according to any of claims 1 to 13, wherein the fixing hook (4e, 40e) is pretensioned in the out-of-use position by means of a spring (4h, 40h).

15. Device according to any of claims 1 to 14, wherein an extendable coat-hook (3d, 30d) is arranged on the wide side of the carrier element (3a, 30a) or hanger body (4a, 40a) facing away from the vehicle seat part (1a, 1c, 1d), which coat-hook in the out-of-use position is held in a dish (3d, 30d') formed on the carrier element (3a, 30a) or hanger body (4a, 40a).

## Revendications

1. Dispositif pour la suspension de vêtements au niveau d'une partie de siège de véhicule, comme un dossier (1a), un appui-tête (1d) ou une fixation d'appui-tête (1c) d'un siège de véhicule (1) avec un appareil de montage (2a, 2b, 2c, 20b, 20b', 20c) destiné à relier le dispositif à la partie de siège de véhicule (1a, 1c, 1d) et un élément formant support (3a, 30a), qui est relié à l'appareil de montage (2a, 2b, 2c, 20b, 20b', 20c), ainsi qu'avec un cintre (4a, 4b, 4c, 40a, 40b, 40c, 40b', 40c') qui est relié à l'élément formant support (3a, 30a), **caractérisé en ce que** le cintre est relié à l'élément formant support par l'intermédiaire d'un couplage démontable (3c, 3c', 4d, 4d', 30c, 50a), un crochet (4e, 40e) est prévu au niveau du cintre (4a, 4b, 4c, 40a, 40b, 40c, 40b', 40c') afin de suspendre le cintre (4a, 4b, 4c, 40a, 40b, 40c, 40b', 40c'), ledit crochet étant mobile entre une position de non-utilisation, dans laquelle le crochet (4e, 40e) est logé complètement ou partiellement dans le cintre (4a, 4b, 4c, 40a, 40b, 40c, 40b', 40c') ou est adjacent à celui-ci, et une position d'utilisation, dans laquelle le crochet (4e, 40e) fait saillie hors du cintre (4a, 4b, 4c, 40a, 40b, 40c, 40b', 40c') de sorte que le cintre (4a, 4b, 4c, 40a, 40b, 40c, 40b', 40c') peut être suspendu à une tringle de garde-robe.

2. Dispositif selon la revendication 1, dans lequel l'élément formant support (3a, 30a) est relié à l'appareil de montage (2a, 2b, 2c, 20b, 20b', 20c) au niveau de son extrémité inférieure par l'intermédiaire d'une articulation (3b, 30b).

3. Dispositif selon l'une quelconque des revendications 1 ou 2, dans lequel l'appareil de montage (2a, 2b, 2c, 20b, 20b', 20c) comprend un dispositif de couplage démontable avec une douille de réception (2a) et un élément enfichable (2b, 20b, 20b') ainsi qu'un dispositif de verrouillage (2c, 20c), avec lequel l'élément enfichable (2b, 20b, 20b') est verrouillé dans la douille de réception (2a).

4. Dispositif selon l'une quelconque des revendications 1 à 3, dans lequel le cintre (4a, 4b, 4c, 40a, 40b, 40c, 40b', 40c') comprend un corps de cintre (4a, 40a) agencé de manière centrale ainsi que des bras de cintre (4b, 4c, 40b, 40c) agencés latéralement au niveau dudit corps de cintre, et dans lequel le corps de cintre (4a, 40a) et les bras de cintre (4b, 4c, 40a, 40b) ont leurs faces inférieures au moins partiellement obturés par des caches (40b', 40c', 50).

5. Dispositif selon la revendication 4, dans lequel le couplage (3c, 3c', 4d, 4d', 30c, 50a) comprend un premier élément de couplage (3c, 3c', 30c) agencé au niveau de l'élément formant support (3a, 30a) et un second élément de couplage (4d, 4d', 50a) agencé au niveau du corps de cintre (4a, 40a).

6. Dispositif selon la revendication 5, dans lequel le premier élément de couplage (3c, 3c', 30c) est agencé au niveau de la face terminale supérieure, dirigé vers le corps de cintre (4a, 40a), de l'élément formant support (3a, 30a) et est réalisé sous forme de raccord enfichable et le second élément de couplage (4d, 4d', 50a) est agencé au niveau de la face inférieure, dirigée vers l'élément formant support (3a, 30a), du corps de cintre (4a, 40a) et est réalisé sous forme de raccord enfichable.

7. Dispositif selon l'une quelconque des revendications 5 à 6, dans lequel un dispositif de verrouillage (50e, 50e', 50e", 50e"') est prévu, avec lequel le premier élément de couplage (3c, 3c', 30c) et le second élément de couplage (4d, 4d', 50a) peuvent être verrouillés.

8. Dispositif selon la revendication 7, dans lequel l'organe d'actionnement (50e") destiné à libérer le dispositif de verrouillage (50e, 50e', 50e", 50e"') est agencé au niveau de l'élément formant support (3a, 30a) ou au niveau du corps de cintre (4a, 40a) sur la face dirigée vers la partie de siège de véhicule (1a, 1c, 1d).

9. Dispositif selon l'une quelconque des revendications 4 à 8, dans lequel un espace de réception (4k, 50c) ou un renfoncement (4o) de forme concave, dans lequel est logé le crochet (4e, 40e) dans la position de non-utilisation, est prévu dans ou au niveau du corps de cintre (4a, 40a).

10. Dispositif selon l'une quelconque des revendications 4 à 9, dans lequel le crochet (4e, 40e) est guidé dans ou au niveau du corps de cintre (4a, 40a) par un guidage linéaire (4f, 4g, 50d', 50d") orienté verticalement.

11. Dispositif selon la revendication 10, dans lequel l'espace de réception (4k, 50c) présente une ouverture (4k', 40k'), agencée sur la face terminale (40a') supérieure du corps de cintre (4a, 40a), à travers laquelle le crochet (4e, 40e) peut être déplacé entre la position de non-utilisation et la position d'utilisation.

12. Dispositif selon l'une quelconque des revendications 4 à 9, dans lequel le crochet (4e, 40e) est relié au corps de cintre (4a, 40a) par l'intermédiaire d'un axe de rotation (4n).

13. Dispositif selon la revendication 12, dans lequel l'axe de rotation (4n) passe à peu près de manière horizontale et parallèle ou de manière perpendiculaire par rapport au grand côté du corps de cintre (4a, 40a).

14. Dispositif selon l'une quelconque des revendications 1 à 13, dans lequel le crochet (4e, 40e) est précontraint dans la position de non-utilisation au moyen d'un ressort (4h, 40h).

15. Dispositif selon l'une quelconque des revendications 1 à 14, dans lequel un crochet à vêtements (3d, 30d) escamotable est agencé sur le grand côté, détourné de la partie de siège de véhicule (1a, 1c, 1d), de l'élément formant support (3a, 30a) ou du corps de cintre (4a, 40a), ledit crochet à vêtements (3d, 30d) étant logé dans la position de non-utilisation dans une auge (3d, 30d') formée au niveau de l'élément formant support (3a, 30a) ou au niveau du corps de cintre (4a, 40a).
